# EUROPÄISCHE PATENTSCHRIFT

(11) **EP 4 335 584 B1**
(45) Veröffentlichungstag und Bekanntmachung des Hinweises auf die Patenterteilung: **04.11.2026**
(21) Anmeldenummer: 23195579.0
(22) Anmeldetag: 06.09.2023
(51) Int. Cl.: B23Q 7/04, B23Q 11/08, B23Q 1/48

(54) **HANDHABUNGSZELLE FÜR EINE WERKZEUGMASCHINE UND FERTIGUNGSSYSTEM**
HANDLING CELL FOR A MACHINE TOOL AND PRODUCTION SYSTEM
CELLULE DE MANIPULATION POUR UNE MACHINE-OUTIL ET SYSTÈME DE FABRICATION

(30) Priorität: 09.09.2022 DE 102022122977
(43) Veröffentlichungstag der Anmeldung: 13.03.2024
(73) Patentinhaber: CHIRON Group SE, 78532 Tuttlingen (DE)
(72) Erfinder: Huber, Sebastian, 78573 Wurmlingen (DE); Maret, Dylan, 1920 Martigny (CH); Kohler, Markus, 78194 Immendingen (DE)
(74) Vertreter: Witte, Weller & Partner Patentanwälte mbB

(56) Entgegenhaltungen:
- CH-B1- 697 416
- CN-A- 108 788 883
- US-A1- 2001 031 197

## Beschreibung

Die vorliegende Offenbarung bezieht sich auf eine Handhabungszelle für eine Werkzeugmaschine sowie auf ein Fertigungssystem mit zumindest einer Werkzeugmaschine und einer Handhabungszelle. Gemäß verschiedenen Aspekten bezieht sich die vorliegende Offenbarung auf kompakt gestaltete Werkzeugmaschinen sowie deren Integration in Fertigungssysteme und Anlagen zur spanenden Fertigung. Kompakt gestaltete Werkzeugmaschinen sind beispielsweise solche mit einem Arbeitsraum, der kleiner als 250 mm x 250 mm x 250 mm ist.

In beispielhaften Ausgestaltungen ist der Arbeitsraum der Werkzeugmaschine kleiner als 200 mm x 200 mm x 200 mm. In beispielhaften Ausgestaltungen ist der Arbeitsraum der Werkzeugmaschine kleiner als 150 mm x 150 mm x 150 mm. In beispielhaften Ausgestaltungen ist der Arbeitsraum der Werkzeugmaschine kleiner als 100 mm x 100 mm x 100 mm. In beispielhaften Ausgestaltungen ist der Arbeitsraum der Werkzeugmaschine kleiner als 75mm x 75 mm x 75 mm. Diese Angaben betreffen insbesondere die möglichen Vorschübe (Verfahrwege) entlang der X, Y sowie der Z-Achse. Der Arbeitsraum kann würfelförmig gestaltet sein. Es sind jedoch auch quaderförmige Bauräume denkbar, deren Verfahrwege in X, Y sowie Z nicht einheitlich sind. Beispielhaft eignen sich derartig gestaltete Werkzeugmaschinen für die feinmechanische Bearbeitung, beispielsweise im Rahmen der Herstellung von Uhren, Schmuck und ähnlichem. Es versteht sich, dass auch andere Anwendungen denkbar sind, etwa im Bereich der Medizintechnik, Präzisionstechnik und dgl.

Werkzeugmaschinen und Anlagen zur spanenden Fertigung sind bekannt. Aus der US 2019/0084102 A1 ist eine Fertigungsanlage bekannt, die eine Mehrzahl übereinander und nebeneinander angeordneter kompakt gestalteter Werkzeugmaschinen aufweist, die in einer gemeinsamen Einhausung angeordnet sind, wobei zusätzlich ein Roboter für den Werkzeugwechsel und/oder Werkstückwechsel vorgesehen ist, der horizontal verfahrbar auf einem vertikal verfahrbaren Balken angeordnet ist. Die Anlage umfasst einen integrierten Speicher für Werkstücke, die mit dem Roboter verfahrbar sind.

Aus der EP 2 227 349 B1 ist eine bewegliche Roboterzelle mit Gehäuse bekannt, die bedarfsweise vor eine Öffnung zu einem Arbeitsraum einer Bearbeitungsmaschine platzierbar ist, um mit einem Roboter Werkstücke laden zu können. Die Roboterzelle blockiert im betriebsfähigen Zustand eine üblicherweise für einen Werker bereitgestellte Zugangsöffnung der Werkzeugmaschine.

Aus der EP 2 036 664 A1 ist eine Bearbeitungsanlage für Werkstücke bekannt, mit wenigstens einer Bearbeitungsmaschine, mit einer zumindest ein Regalmagazin aufweisenden Schutzeinhausung und mit einer innerhalb der Schutzeinhausung angeordneten Ladeeinrichtung zum Be- und Entladen der Bearbeitungsmaschine, wobei die Ladeeinrichtung einen entlang einer Führung verfahrbaren Schlitten mit einem verstellbaren Ausleger umfasst, der zumindest eine Handhabungseinheit für handzuhabende Teile trägt, wobei die Führung für den Schlitten in einem Überkopfbereich vorgesehen ist, und wobei der auf der Schlittenunterseite angelenkte Ausleger der Ladeeinrichtung zwei miteinander gekoppelte Arme aufweist, die zueinander verschwenkbar sind. Das zumindest eine Regalmagazin ist Bestandteil der Schutzeinhausung.

Aus der DE 35 43 209 A1 ist ein Fertigungssystem zur flexiblen Fertigung von Werkstücken bekannt, das mehrere Werkzeugmaschinen, ein die Werkzeugmaschinen verbindendes Transportsystem für Werkstücke und ein Beschickungsgerät für jede Werkzeugmaschine aufweist, das zwischen der Werkzeugmaschine und dem Transportsystem angeordnet und zum Beladen und Entladen der Werkzeugmaschine ausgebildet ist. Das Fertigungssystem umfasst eine Beladestation und eine Entladestation, die voneinander beabstandet sind. Dort sind jeweils Pufferspeicher erforderlich.

Aus der DE 10 2014 114 258 A1 ist eine Anordnung bekannt, die eine Einzelplatz-Zerspanungsmaschine und eine Roboterzelle umfasst, wobei die Roboterzelle zum Beladen und Entladen der Zerspanungsmaschine an diese ankoppelbar ist, wobei die Zerspanungsmaschine einen Maschinenraum und die Roboterzelle einen Roboterzellenraum aufweist, und wobei im angekoppelten Zustand der Roboterzelle der Maschinenraum und der Roboterzellenraum einen gemeinsamen Bearbeitungsraum bilden. Innerhalb der Roboterzelle sind Pufferspeicher angeordnet. Die Roboterzelle blockiert im betriebsfähigen Zustand eine üblicherweise für einen Werker bereitgestellte Zugangsöffnung der Werkzeugmaschine.

Aus der CH 697 416 B1 ist ein Handhabungssystem zur Handhabung von in Werkstückträgern abgelegten Werkstücken bekannt, mit einem Industrieroboter zum Übergeben der Werkstücke aus dem einen in einer Abstellzone positionierten Werkstückträger an eine Bearbeitungsmaschine und umgekehrt, einer Stapelzone für die jeweiligen Werkstückträger und einer Wechselzone zum Zu- und Abführen von Stapeln der jeweiligen Werkstückträger. Das Handhabungssystem ist kreisförmig angeordnet, mit dem Industrieroboter im Zentrum. Die Werkstückträger können über einen separaten Handhabungsmechanismus entlang einer Kreisbahn um das Zentrum zwischen den verschiedenen Zonen verfahren werden.

Aus der US 2001/0031197 A1, die die Basis für den Oberbegriff des Anspruchs 1 bildet, ist eine Automationszelle mit drei hintereinander angeordneten Plätzen für gestapelte Teileträger bekannt, wobei ein erster der Plätze ein Stellplatz für einen Wagen ist. Die Teileträger können mit einem Transfermechanismus innerhalb der Zelle zwischen den drei Stapeln transferiert werden. Aus der CN 108 788 883 A ist eine Ladezelle für eine Werkzeugmaschine bekannt, wobei innerhalb der Ladezelle ein hängender Laderoboter angeordnet ist, um Werkstücke in die Werkstückmaschine einzuwechseln.

Es hat sich gezeigt, dass beispielhaft mit einer kompakt gestalteten Werkzeugmaschine auch bei relativ geringen Außenabmessungen der Werkzeugmaschine die gewünschten Bauteile mit hoher Präzision und Effizienz gefertigt werden können.

Es hat sich jedoch auch gezeigt, dass unter Automatisierungsaspekten bei kompakt gestalteten Werkzeugmaschinen besondere Randbedingungen zu berücksichtigen sind. Zum einen können Transfersysteme, Handhabungseinheiten und Ähnliches nicht beliebig kompakt gestaltet werden. Selbst wenn dies technologisch möglich wäre, so gibt es in der Praxis häufig bestimmte Mindestabmessungen für Transfersysteme, Handhabungseinheit, Roboter, Greifer und ähnliches.

Dies führt unter Umständen dazu, dass die eigentliche Werkzeugmaschine (bzw. deren Arbeitsraum) klein in Relation zur Automatisierungstechnik (Handhabungstechnik, Transfersysteme und Ähnliches) ist.

Ferner muss die Automatisierungstechnik (beispielsweise Roboter mit Greifer und Ähnliches) mit der Werkzeugmaschine im Bauraum (gegebenenfalls Arbeitsraum) der Werkzeugmaschine interagieren, um eine Übergabe von Werkstücken und gegebenenfalls Werkzeugen zu ermöglichen.

Ferner hat sich gezeigt, dass auch bei kompakt gestalteten Werkzeugmaschinen häufig der Wunsch für die Möglichkeit zur direkten visuellen Überwachung durch den Bediener besteht. Ähnlich wie bei Werkzeugmaschinen größerer Bauart werden regelmäßig Zugangsöffnungen (Türen) mit Scheiben gefordert. Dies führt in einer automatisierten Anlage dazu, dass dieser Bereich ("Vorderseite" der Werkzeugmaschine) gerade nicht für die Automatisierungstechnik zur Verfügung steht.

Ferner hat sich gezeigt, dass kompakt gestaltete Werkzeugmaschinen häufig klein im Verhältnis zu marktüblicher Automatisierungstechnik gestaltet sind. Dies resultiert in spezifischen Anforderungen für die Automatisierung kompakt gestalteter Werkzeugmaschinen. Ferner ergeben sich neue Möglichkeiten für die Automatisierung und Verkettung, die gegebenenfalls mit konventionellen Werkzeugmaschinen nicht umsetzbar waren.

Der vorliegenden Offenbarung liegt die Aufgabe zugrunde, eine Handhabungszelle für eine Werkzeugmaschine anzugeben, die insbesondere für kompakte Werkzeugmaschinen geeignet ist. Die Handhabungszelle soll möglichst besondere Rahmenbedingungen bei kompakt gestalteten Werkzeugmaschinen berücksichtigen. Mithilfe der Handhabungszelle sollen sich Fertigungssysteme realisieren lassen, die auch bei nur kleinem Bauraum eine teilautomatisierte oder gar hochautomatisierte Fertigung ermöglichen. Dies bezieht sich beispielhaft auf den Werkstückwechsel.

Schließlich soll im Rahmen der vorliegenden Offenbarung ein Fertigungssystem angegeben werden, das eine Handhabungszelle sowie zumindest eine Werkzeugmaschine aufweist, wobei die Werkzeugmaschine über die Handhabungszelle automatisiert zu Zwecken des Werkstückwechsels beladen und entladen werden kann.

Gemäß einem ersten Aspekt bezieht sich die vorliegende Offenbarung auf eine Handhabungszelle für eine Werkzeugmaschine, die Folgendes aufweist:
- eine erste Beladeschnittstelle, die an einen Arbeitsraum einer ersten Werkzeugmaschine ankoppelbar ist,
- eine Handhabungseinheit mit einem Handhabungsroboter,
- eine Beschickungsschnittstelle für einen Beschickungswagen, der zum Transport von auf Ladehilfsmitteln, insbesondere auf Tablaren, angeordneten Werkstücken dient, und
- eine Bereitstellungseinheit, die Ladehilfsmittel zwischen dem Beschickungswagen und einer Bereitstellungsposition zur Übergabe zwischen der Handhabungseinheit und der Bereitstellungseinheit verfährt, und
- einen in eine Einhausung der Handhabungszelle integrierten Stellplatz für den Beschickungswagen,
   wobei im eingefahrenen Zustand des Beschickungswagens ein Transfer von Ladehilfsmitteln zwischen dem Beschickungswagen und der Bereitstellungsposition ermöglicht ist, und wobei der Beschickungswagen ein bewegliches Sicherungselement zur Sicherung aufgenommener Ladehilfsmittel aufweist, das beim Einfahren des Beschickungswagens in den Stellplatz mechanisch entsichert wird.

Auf diese Weise kann eine Werkzeugmaschine für einen automatisierten Werkstückwechsel ertüchtigt werden. Die Handhabungszelle eignet sich zumindest in beispielhaften Ausgestaltungen für kompakt gestaltete Werkzeugmaschinen.

Bei dem Ladehilfsmittel handelt es sich beispielhaft um eine Palette, einen Tablar, ein Tray oder eine Box zur Aufnahme einer Mehrzahl oder gar Vielzahl von Werkstücken. Bei den Werkstücken handelt es sich beispielsweise um feinmechanische Werkstücke, Bauteile für Uhren, Bauteile für die Medizintechnik und Ähnliches. In einer beispielhaften Ausgestaltung ist das Ladehilfsmittel sowohl zur Aufnahme unbearbeiteter Werkstücke (Rohlinge) als auch zur Aufnahme bearbeiteter Werkstücke ausgebildet. Es ist jedoch auch vorstellbar, einen ersten Typ von Ladehilfsmitteln zur Bereitstellung unbearbeiteter Werkstücke und einen zweiten Typ von Ladehilfsmitteln zur Aufnahme bearbeiteter Werkstücke zu nutzen.

Beispielweise kann die Bearbeitung von Werkstücken mit nur kleinen Abmessungen mit Werkzeugmaschinen mit entsprechend kleinem Arbeitsraum erfolgen. Dies wirkt sich insgesamt positiv auf den Bauraumbedarf (Grundfläche) aus. Wenn jedoch Werkzeugmaschinen mit nur kleinen Abmessungen und insbesondere kleinen Bauräumen genutzt werden, kann es von Vorteil sein, wenn die Handhabungseinheit mit dem Handhabungsroboter so wenig wie möglich mit dem Bauraum interagiert.

Dies kann sich auf Ausgestaltungen beziehen, bei denen der Handhabungsroboter nur zu Zwecken des Werkstückwechsels in den Bauraum der Werkzeugmaschine einfährt. Wenn gerade kein Werkstückwechsel durchgeführt wird, ist gemäß diesen Ausgestaltungen der Handhabungsroboter vollständig aus dem Arbeitsraum herausgefahren.

In einer beispielhaften Ausgestaltung ist die erste Beladeschnittstelle durch eine Tür verschließbar, so dass der Arbeitsraum hinreichend von der Handhabungszelle separiert ist, wenn kein Werkstückwechsel erfolgt.

Gemäß einer beispielhaften Ausgestaltung ist der Handhabungsroboter dazu ausgebildet, zumindest mit einem Werkstückgreifer durch die erste Beladeschnittstelle hindurch in den Arbeitsraum der Werkzeugmaschine einzufahren, um dort ein Werkstück direkt an einen Werkstückhalter zu übergeben oder von diesem zu übernehmen.

Der Handhabungsroboter kann mit dem Werkstückgreifer weit genug in den Arbeitsraum einfahren, um dort Werkstücke auszuwechseln. Dies umfasst beispielhaft eine Übergabe von zu bearbeitenden Werkstücken an einen Werkstückhalter sowie eine Übernahme bearbeiteter Werkstücke vom Werkstückhalter. Da der Handhabungsroboter nicht im Arbeitsraum installiert ist, wird der Arbeitsraum nicht vom Handhabungsroboter in Anspruch genommen, wenn kein Werkstückwechsel erfolgt und der Handhabungsroboter mit dem Werkstückgreifer aus dem Arbeitsraum herausgefahren ist.

Gemäß einer weiteren beispielhaften Ausgestaltung ist der Handhabungsroboter ein hängender Roboter, insbesondere ein hängender Knickarmroboter. Auf diese Weise ist der Handhabungsroboter innerhalb der Handhabungszelle hängend angeordnet, so dass ein Bereich unterhalb des Handhabungsroboters grundsätzlich als Bauraum für Einbauten zur Verfügung steht. Dies kann die Beschickung der Handhabungszelle mit dem Beschickungswagen vereinfachen. Der Beschickungswagen ist beispielsweise als Flurförderwagen gestaltet. Der Beschickungswagen kann daher in beispielhaften Ausgestaltungen unterhalb des Handhabungsroboters platziert werden, zumindest wenn der Handhabungsroboter in einem eingefahrenen/eingezogenen Zustand ist.

Gemäß einer weiteren Ausgestaltung weist der Handhabungsroboter einen Mehrfachgreifer für Werkstücke auf. Der Mehrfachgreifer ist beispielsweise als Doppelgreifer, Dreifachgreifer oder Vierfachgreifer gestaltet. Mit einem Mehrfachgreifer kann der Werkstückwechsel beschleunigt werden. Der Handhabungsroboter kann im Arbeitsraum ein bearbeitetes Werkstück aufnehmen und ein zu bearbeitendes Werkstück (Rohling) abgeben, ohne zwischenzeitlich aus dem Arbeitsraum herausgefahren werden zu müssen. Dasselbe gilt für den Wechsel von Werkstücken beim Ladehilfsmittel in der Bereitstellungsposition.

Gemäß einer weiteren Ausgestaltung weist die Handhabungszelle ferner eine von der ersten Beladeschnittstelle abgewandte zweite Beladeschnittstelle auf, die an einen Arbeitsraum einer zweiten Werkzeugmaschine ankoppelbar ist.

Auf diese Weise kann die Handhabungszelle zur Versorgung zweier Werkzeugmaschinen genutzt werden. Auch bei der zweiten Werkzeugmaschine wird der Arbeitsraum nicht übermäßig beansprucht, wenn kein Werkstückwechsel durchgeführt wird.

Gemäß einer weiteren Ausgestaltung ist der Handhabungsroboter entlang einer Positionierachse, insbesondere einer horizontal orientierten und/oder deckenseitigen Positionierachse, zwischen der ersten Beladeschnittstelle und der zweiten Beladeschnittstelle verfahrbar, wobei die Bereitstellungsposition entlang des Verfahrweges des Handhabungsroboters entlang der Positionierachse zwischen der ersten Beladeschnittstelle und der zweiten Beladeschnittstelle angeordnet ist.

Auf diese Weise kann der Handhabungsroboter sowohl eine erste Werkzeugmaschine an der ersten Beladeschnittstelle als auch eine zweite Werkzeugmaschine an der zweiten Beladeschnittstelle ansteuern. Weitere Bewegungsfreiheitsgrade des Handhabungsroboters erlauben ein Einfahren des Handhabungsroboters mit dem Werkstückgreifer in den jeweiligen Arbeitsraum.

Gemäß einer weiteren Ausgestaltung ist der Handhabungsroboter bei der Verfahrbewegung entlang der Positionierachse zwischen der ersten Beladeschnittstelle und der zweiten Beladeschnittstelle oberhalb des Beschickungswagens entlanggeführt.

Auf diese Weise kann der Raum unter dem Handhabungsroboter (bzw. unter oder neben der Positionierachse) zu Beschickungszwecken genutzt werden. Die Handhabungszelle kann durch den Beschickungswagen eine beträchtliche Kapazität zur Aufnahme von Werkstücken aufweisen. Auf diese Weise können die beiden Werkzeugmaschinen zumindest zeitweise automatisiert und autonom betrieben werden. Dies umfasst beispielhaft sowohl die Bereitstellung unbearbeiteter Werkstücke (Rohlinge) als auch die Aufnahme bearbeiteter Werkstücke einer Serie von Werkstücken. Der Beschickungswagen kann eine Mehrzahl von Rohlingen in die Handhabungszelle einbringen und nach der Bearbeitung mit einer entsprechenden Anzahl bearbeiteter Werkstücke aus der Handhabungszelle herausgefahren werden.

Die Handhabungszelle weist ferner einen in eine Einhausung der Handhabungszelle integrierten Stellplatz für den Beschickungswagen auf, wobei im eingefahrenen Zustand des Beschickungswagens ein Transfer von Ladehilfsmitteln zwischen dem Beschickungswagen und der Bereitstellungsposition ermöglicht ist.

Die Bereitstellungseinheit kann den am Stellplatz positionierten Beschickungswagen direkt anfahren, um Ladehilfsmittel und darauf angeordnete Werkstücke zwischen dem Beschickungswagen und der Bereitstellungsposition zu verfahren.

In einer beispielhaften Ausgestaltung kann der Beschickungswagen vollständig in die Handhabungszelle einfahren. Dies umfasst beispielhaft auch eine Abgrenzung nach außen, etwa durch eine Tür, wenn der Beschickungswagen eingefahren und am Stellplatz positioniert ist.

Der Beschickungswagen weist ein bewegliches Sicherungselement zur Sicherung aufgenommener Ladehilfsmittel auf, wobei das Sicherungselement beim Einfahren des Beschickungswagens in die Handhabungszelle mechanisch entsichert wird.

Das bewegliche Sicherungselement ist beispielhaft als Sicherungsleiste gestaltet. Die Sicherungsleiste erstreckt sich über mehrere oder sämtliche Aufnahmeplätze für Ladehilfsmittel im Beschickungswagen. In einer beispielhaften Ausgestaltung weist die Sicherungsleiste eine Rolle auf, die beim Einfahren des Beschickungswagens in die Handhabungszelle an einer Rampe angehoben wird. Auf diese Weise wird auch die Sicherungsleiste angehoben. Die Sicherungsleiste umfasst ferner eine Umlenkung, die die Hubbewegung beim Anheben zumindest teilweise in eine Horizontalbewegung umlenkt. Auf diese Weise können die Aufnahmeplätze freigegeben werden, wenn das Sicherungselement seitlich ausrückt.

Gemäß einer weiteren Ausgestaltung weist die Bereitstellungseinheit eine vertikal orientierte Hubachse und eine horizontal orientierte Transferachse mit einem Träger für zumindest ein Ladehilfsmittel auf.

Auf diese Weise kann ein Ladehilfsmittel vom Beschickungswagen entnommen und zur Übergabe von Werkstücken mit dem Handhabungsroboter an der Bereitstellungsposition bereitgestellt werden. Beispielhaft ist eine für den Transfer der Ladehilfsmittel zwischen dem Beschickungswagen und der Bereitstellungsposition genutzte richtung kann Bestandteil einer übergeordneten Steuervorrichtung des Fertigungssystems sein.

Gemäß einer weiteren Ausgestaltung weist die Bereitstellungseinheit ferner einen Kippmechanismus auf, der bedarfsweise Ladehilfsmittel ankippt, um eine Vorzugsorientierung für Werkstücke im Ladehilfsmittel zu erzeugen. Auf diese Weise kann ein Ladehilfsmittel an der Bereitstellungsposition geneigt werden. Beispielhaft ist der Kippmechanismus am Träger der Transferachse angeordnet. Es sind auch Ausgestaltungen vorstellbar, bei denen auf eine solche Verkippung verzichtet wird.

Durch Verkippung des Ladehilfsmittels rutschen Werkstücke innerhalb ihres jeweiligen Aufnahmesitzes in eine definierte Richtung, beispielsweise in Richtung auf einen Anschlag. Auf diese Weise erhöht sich insgesamt die Genauigkeit. Für den Handhabungsroboter vereinfacht sich das Greifen von Werkstücken.

Gemäß einer weiteren Ausgestaltung weist der Kippmechanismus eine Kippachse, ein von der Kippachse beabstandetes gestellfestes Haltestück und ein in das Haltestück einrückbares Lagerstück auf, wobei bei eingerücktem Lagerstück eine Hubbewegung entlang der Hubachse eine Verkippung des Ladehilfsmittels ermöglicht ist. Das Haltestück kann das Lagerstück (insbesondere in der vertikalen Hubrichtung) festhalten, so dass bei einer weiteren Hubbewegung des Hubschlittens eine Verkippung um die Kippachse folgt. Auf diese Weise kann die Kippbewegung erzeugt werden, ohne dass ein separater Kippantrieb erforderlich ist. Beispielhaft ist der Träger für das zumindest eine Ladehilfsmittel schwenkbar am Hubschlitten gelagert. Eine nicht gekippte Position wird selbsttätig, durch Schwerkraft bedingt, eingenommen.

Gemäß einer weiteren Ausgestaltung ist ein Wechsel des Beschickungswagens ermöglicht, während ein Ladehilfsmittel an der Bereitstellungsposition für die Übergabe von Werkstücken zur Verfügung steht. Dies kann beispielsweise dadurch bewirkt werden, dass die Bereitstellungseinheit ein Ladehilfsmittel an der Bereitstellungsposition bereitstellt und währenddessen nicht mit dem Beschickungswagen interagiert. Sodann ist zumindest ein Pufferspeicher (also beispielsweise ein Ladehilfsmittel zur Aufnahme einer Mehrzahl von Werkstücken) für eine Mehrzahl von Werkstücken an der Bereitstellungsposition vorgesehen. Dies gewährleistet ein bestimmtes Zeitfenster, in dem ein Beschickungswagen ausgetauscht werden kann. Dies erlaubt eine unterbrechungsarme Bearbeitung einer Serie von Werkstücken.

Gemäß einem weiteren Aspekt bezieht sich die vorliegende Offenbarung auf ein Fertigungssystem für die spanende Fertigung, insbesondere zur Herstellung feinmechanischer Werkstücke, das Folgendes aufweist:
- zumindest eine insbesondere kompakt gestaltete Werkzeugmaschine, die zur Mehrachsbearbeitung ausgebildet ist und einen Werkzeughalter und einen Werkstückhalter aufweist, die relativ zueinander in zumindest drei Achsen verfahrbar sind,
   wobei der Werkzeughalter und der Werkstückhalter an einer Rückseite eines Arbeitsraums der Werkzeugmaschine gelagert sind, und
- eine Handhabungszelle gemäß zumindest einer der hierin beschriebenen Ausgestaltungen, wobei die Beladeschnittstelle seitlich an den Arbeitsraum der Werkzeugmaschine ankoppelt.

Auf diese Weise kann die Werkzeugmaschine zumindest teilautomatisiert betrieben werden. Dies umfasst beispielsweise die Fertigung von Serien, wobei Werkstücke teilautomatisch oder vollautomatisch gewechselt werden können.

Die Vorderseite des Arbeitsraums ist daher zumindest in beispielhaften Ausgestaltungen frei und für einen Bediener einsehbar und zugänglich. Die Vorderseite kann auch als Bedienerseite bezeichnet werden. Die Vorderseite ist der Rückseite gegenüberliegend angeordnet. Seitliche Seiten des Arbeitsraums stehen für die Handhabung (Werkstückwechsel, Werkzeugwechsel) zur Verfügung. Auf diese Weise wird der kompakten Bauart Rechnung getragen.

Die Handhabungszelle ist zum Arbeitsraum der Werkzeugmaschine benachbart, beispielsweise mit einem geringen Abstand seitlich hierzu angeordnet. Die Handhabungseinheit ist der Handhabungszelle und nicht der Werkzeugmaschine zugeordnet. Dies heißt, dass bei der Werkzeugmaschine, die nur einen verhältnismäßig kleinen Arbeitsraum aufweist, keine aufwändigen Eingriffe und Anpassungen erforderlich sind.

Die Handhabungseinheit kann den Werkstückhalter und eine gegebenenfalls dort bereits angeordnete Haltevorrichtung anfahren, um im Arbeitsraum einen Werkstückwechsel (Beladen und Entladen) vorzunehmen. Dies kann auch die Entnahme von Reststücken (Abfall) betreffen.

In einer beispielhaften Ausgestaltung ist der Werkzeughalter als Werkzeugspindel gestaltet und mit einer vertikal orientierten Achse versehen. Der Werkstückhalter ist beispielsweise einer Schwenkachse bzw. einem Schwenktisch der Werkzeugmaschine zugeordnet.

Gemäß einer beispielhaften Ausgestaltung weist das Fertigungssystem ferner Folgendes auf:
- zumindest eine weitere, insbesondere kompakt gestaltete Werkzeugmaschine, die zur Mehrachsbearbeitung ausgebildet ist und einen Werkzeughalter und einen Werkstückhalter aufweist, die relativ zueinander in zumindest drei Achsen verfahrbar sind, wobei der Werkzeughalter und der Werkstückhalter an einer Rückseite eines Arbeitsraums der Werkzeugmaschine gelagert sind,
   wobei die Handhabungszelle eine von der ersten Beladeschnittstelle abgewandte zweite Beladeschnittstelle aufweist,
   wobei die erste Beladeschnittstelle seitlich an den Arbeitsraum der ersten Werkzeugmaschine ankoppelt, und
   wobei die zweite Beladeschnittstelle seitlich an den Arbeitsraum der zweiten Werkzeugmaschine ankoppelt.

Auf diese Weise können mit nur einer Handhabungszelle zwei Werkzeugmaschinen automatisiert oder zumindest teilautomatisierte betrieben werden. Dies bezieht sich insbesondere auf den Werkstückwechsel.

Gemäß einer weiteren beispielhaften Ausgestaltung weisen die erste Werkzeugmaschine und die zweite Werkzeugmaschine jeweils eine in Bezug auf den Arbeitsraum definierte Beladeseite auf, die für die erste Werkzeugmaschine und die zweite Werkzeugmaschine in Bezug auf den jeweiligen Arbeitsraum gleich angeordnet ist, wobei die erste Werkzeugmaschine und die zweite Werkzeugmaschine einander gegenüberliegend und um eine gedachte vertikale Mittenachse um 180° versetzt zueinander angeordnet und an die Handhabungszelle angekoppelt sind.

Dies hat den Vorteil, dass die Handhabungszelle zwischen zwei im Wesentlichen gleichartigen oder gar identischen Werkzeugmaschinen eingeordnet sein kann, bei denen (in Bezug auf deren Arbeitsräume und Werkzeugspindel) jeweils dieselbe Seite des Arbeitsraums als Beladeseite (Werkstückwechselseite) dient. Mit anderen Worten sind aus Sicht eines Bedieners die Bedienerseite der ersten Werkzeugmaschine und die Bedienerseite der zweiten Werkzeugmaschine gegensinnig orientiert. Beispielhaft ist die dann jeweils von der Handhabungszelle abgewandte (seitliche) Seite der Werkzeugmaschinen eine Rüstseite (Werkzeugwechselseite).

Weitere Merkmale und Vorteile der Offenbarung ergeben sich aus der nachfolgenden Beschreibung und Erläuterung mehrerer beispielhafter Ausführungsformen unter Bezugnahme auf die Zeichnungen. Es zeigen:
- Fig. 1:: eine perspektivische Ansicht einer Werkzeugmaschine;
- Fig. 2:: eine perspektivische Ansicht eines Fertigungssystems mit einer Werkzeugmaschine und einer mit dieser gekoppelten Handhabungszelle;
- Fig. 3:: eine schematische Draufsicht auf ein Fertigungssystem, das eine Handhabungszelle aufweist, die zwischen einer ersten Werkzeugmaschine und einer zweiten Werkzeugmaschine angeordnet ist, um beide Werkzeugmaschinen mit Werkstücken zu beladen;
- Fig. 4:: eine perspektivische Ansicht einer Handhabungszelle mit geöffneter Tür, wobei ein Beschickungswagen in die Handhabungszelle eingefahren ist;
- Fig. 5:: eine Detailansicht der Anordnung gemäß Fig. 4;
- Fig. 6:: eine seitliche Ansicht einer Bereitstellungseinheit, die mit einem Beschickungswagen zusammenwirkt;
- Fig. 7:: eine perspektivische Teilansicht einer Bereitstellungseinheit, die ein Ladehilfsmittel aus einem Beschickungswagen entnommen hat und in einer Bereitstellungsposition platziert;
- Fig. 8:: eine seitliche Teilansicht zur Veranschaulichung des Transfers von Ladehilfsmitteln innerhalb der Handhabungszelle zwischen einem Beschickungswagen sowie einer Handhabungseinheit mit Handhabungsroboter;
- Fig. 9:: eine perspektivische Teilansicht eines Trägers für Ladehilfsmittel, der der Bereitstellungseinheit zugeordnet ist, zur Veranschaulichung einer Kippfunktion; und
- Fig. 10:: eine perspektivische Teilansicht einer Handhabungseinheit mit einem Handhabungsroboter zur Veranschaulichung eines Werkstückgreifers.

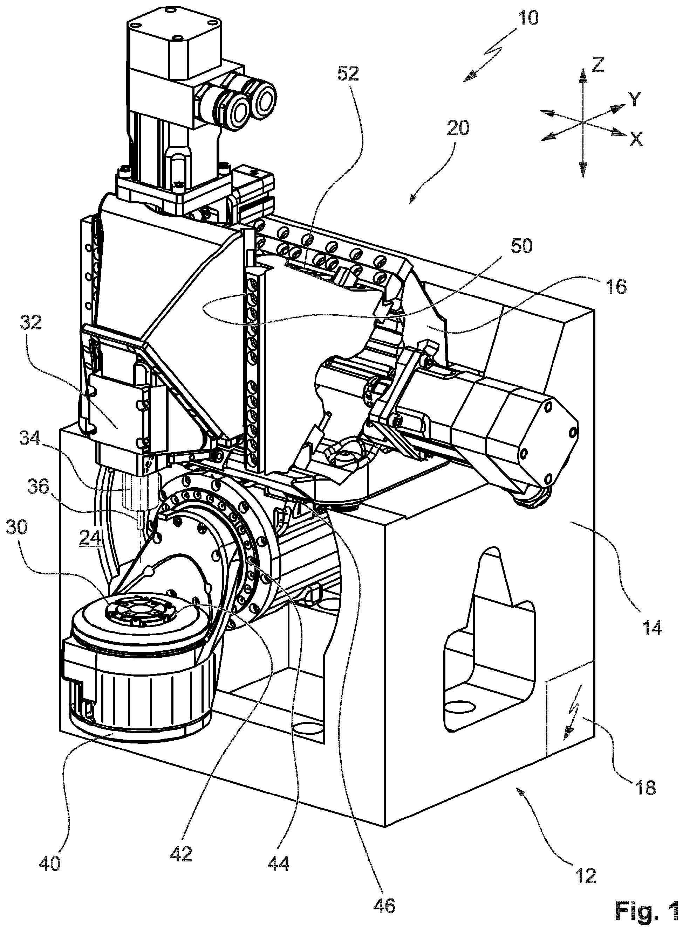

Fig. 1 veranschaulicht anhand einer perspektivischen Darstellung eine beispielhafte Ausgestaltung einer kompakt gestalteten Werkzeugmaschine 10, die sich zur Herstellung feinmechanischer Bauteile eignet. Die Werkzeugmaschine 10 umfasst ein Gestell 12, das im Ausführungsbeispiel ein Untergestell 14 umfasst, auf dem ein Gestellblock 16 gelagert ist. Wesentliche Kräfte, die bei der Bearbeitung entstehen, werden vom Gestellblock 16 aufgenommen. Das Untergestell 14 dient als Auflage für den Gestellblock 16. In Fig. 1 ist ferner mit 18 eine Steuereinrichtung der Werkzeugmaschine 10 angedeutet. Die Steuereinrichtung 18 steuert Komponenten und Funktionen der Werkzeugmaschine 10, um Werkstücke in der gewünschten Weise zu bearbeiten. Auch eine Steuerung über externe Einrichtungen ist vorstellbar.

Die Werkzeugmaschine 10 umfasst ferner eine Kinematik 20, die als Mehrachs-Kinematik gestaltet ist. In zumindest einigen der Figuren ist aus Veranschaulichungsgründen ein kartesisches Koordinatensystem X-Y-Z angezeigt. Das Koordinatensystem X-Y-Z umfasst eine X-Achse (Seitenrichtung), eine Y-Achse (Tiefenrichtung), und eine Z-Richtung (Höhenrichtung). Die X-Achse und die Y-Achse sind im Ausführungsbeispiel horizontale Achsen. Die Z-Achse ist im Ausführungsbeispiel eine vertikale Achse. Die Achsen X-Y-Z stehen orthogonal aufeinander. Das Koordinatensystem X-Y-Z dient in erster Linie zur Veranschaulichung und Beschreibung von Komponenten und Funktionen der Werkzeugmaschine 10. Es versteht sich, dass zu diesen Zwecken auch andere Koordinatensysteme verwendbar sind. Das Koordinatensystem X-Y-Z ist daher nicht einschränkend zu verstehen. Der Fachmann kann die erforderlichen gedanklichen Schritte zur Überführung in andere Koordinatensysteme ohne weiteres durchführen.

Die Kinematik 20 umfasst im Ausführungsbeispiel verschiedene Bauteile, die mittelbar oder unmittelbar am Gestellblock 16 gelagert sind. Dies sorgt für kurze Kraftwege und eine hohe Steifigkeit. In Fig. 1 ist ferner mit 24 ein Arbeitsraum angedeutet, in dem die Bearbeitung mit der Werkzeugmaschine 10 stattfindet.

Die Werkzeugmaschine 10 umfasst ferner einen Werkstückhalter (auch: Werkstückaufnahme) 30 zur Aufnahme zumindest eines zu bearbeitenden Werkstücks. Ferner ist eine Werkzeugspindel 32 vorgesehen. Die Werkzeugspindel 32 umfasst einen Werkzeughalter 34, der zur Aufnahme eines Werkzeugs 36 ausgebildet ist. Das Werkzeug 36 ist rotatorisch antreibbar, um ein vom Werkstückhalter 30 gehaltenes Werkstück zu bearbeiten.

Der Werkstückhalter 30 sitzt im Ausführungsbeispiel auf einem einseitig geführten Ausleger 40, der einen Schwenkantrieb oder Drehantrieb 42 für den Werkstückhalter 30 beherbergt. Die auf diese Weise bereitgestellte rotatorische Achse kann auch als C-Achse bezeichnet werden. Der Ausleger 40 ist über einen weiteren Schwenkantrieb 44 mit einem Linearantrieb 46 gekoppelt, der wiederum am Gestellblock 16 gelagert ist. Der Schwenkantrieb 44 stellt eine rotatorische Achse bereit, die als B-Achse bezeichnet werden kann. Der Lineartrieb 46 stellt eine translatorische Achse bereit, die als Y-Achse bezeichnet werden kann.

Die Werkzeugspindel 32 ist über einen Linearantrieb 50 und einen Linearantrieb 52 mit dem Gestellblock 16 gekoppelt. Der Linearantrieb 50 stellt eine translatorische Achse bereit, die auch als Z-Achse bezeichnet werden kann. Der Lineartrieb 52 stellt eine translatorische Achse bereit, die auch als X-Achse bezeichnet werden kann. Die beiden Linearantriebe 50, 52 bilden einen Kreuzschlittenantrieb. Im Ausführungsbeispiel sind zwei translatorische Achsen (X, Z) der Werkzeugspindel 32 bzw. dem Werkzeug 36 zugeordnet. Eine translatorische Achse (Y) ist der Werkstückaufnahme 30 bzw. dem Werkstück zugeordnet. Ferner sind im Ausführungsbeispiel zwei rotatorische Achsen/Schwenkachsen (B, C) der Werkstückaufnahme 30 bzw. dem Werkstück zugeordnet. Andere Arten der Zuordnung sind denkbar und vom Konzept der Maschinenkinematik abhängig.

Insgesamt stellt die Werkzeugmaschine 10 einen kompakten Arbeitsraum 24 bereit. Dies führt wiederum zu einer geringen Baugröße der Werkzeugmaschine 10, verbunden mit geringem Gewicht und geringem Energiebedarf. Gleichwohl kann aufgrund der konstruktiv vorgegebenen Steifigkeit eine hohe Präzision und eine hohe Abtragsleistung gewährleistet werden. Der Arbeitsraum 24 ist gut zugänglich, da der Werkstückhalter 30 und der Werkzeughalter 34 jeweils an eine Rückseite des Arbeitsraums 24 mittelbar oder unmittelbar am Gestellblock 16 sowie am Untergestell 14 des Gestells 12 angeordnet und gelagert sind. Damit stehen grundsätzlich drei Seiten (Vorderseite sowie zwei seitliche Seiten) für einen horizontalen Zugang zum Arbeitsraum 24 zur Verfügung.

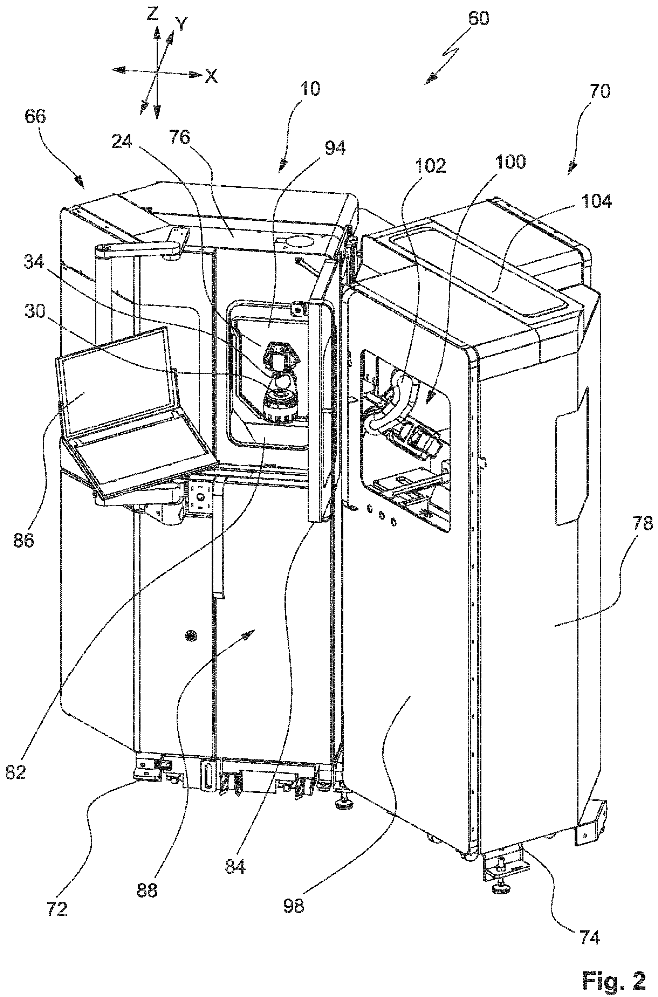

Fig. 2 veranschaulicht anhand einer perspektivischen Darstellung eine Ausgestaltung eines Fertigungssystems 60. Das Fertigungssystem 60 umfasst eine Werkzeugmaschine 10, die im Ausführungsbeispiel gemäß der in Fig. 1 gezeigten Gestaltung ausgebildet ist. Ferner ist eine Handhabungszelle 70 vorgesehen, die seitlich an die Werkzeugmaschine 10 bzw. deren Arbeitsraum 24 ankoppelt. Seitlich heißt im Ausführungsbeispiel, dass das Ankoppelt weder an einer Rückseite noch einer Vorderseite erfolgt.

Im Ausführungsbeispiel gemäß Fig. 2 umfasst das Fertigungssystem 60 ferner eine Rüstzelle 66, die ebenso seitlich an den Arbeitsraum 24 der Werkzeugmaschine 10 ankoppelt. Beispielhaft ist die Werkzeugmaschine 10 zwischen der Rüstzelle 66 und der Handhabungszelle 70 angeordnet. Die Werkzeugmaschine 10 steht auf einem Grundgestell 72, das im Ausführungsbeispiel bodenseitig gelagert ist. Der Arbeitsraum 24 und weitere Komponenten der Werkzeugmaschine 10 sind durch eine Einhausung 76 verschließbar. Im Ausführungsbeispiel beherbergt die Einhausung 76 auch die Rüstzelle 66. Dies ist nicht einschränkend zu verstehen.

Im Arbeitsraum 24 sind der Werkstückhalter 30 sowie der Werkzeughalter 34 angeordnet und an einer Rückseite 94 des Arbeitsraums 24 gelagert. Auf diese Weise ist eine gute Zugänglichkeit von einer der Rückseite 94 gegenüberliegenden Vorderseite gegeben, die als Bedienerseite 88 bezeichnet wird. Über eine Zugangsöffnung 82 ist der Arbeitsraum 24 zugänglich. An der Bedienerseite 88 ist der Arbeitsraum 24 gut einsehbar. Im Ausführungsbeispiel ist eine Tür 84 vorgesehen, die die Zugangsöffnung 82 bedarfsweise verschließt. Die Tür 84 ist beispielhaft als Schwingtür gestaltet. Es ist auch vorstellbar, die Tür 84 als Schiebetür zu gestalten, insbesondere als vertikal verfahrbare Schiebetür, die zur Freigabe der Zugangsöffnung 82 nach oben verfahren wird.

Fig. 2 zeigt ferner eine Bedienkonsole 86, die einen Bediener zugewandt ist, der an der Bedienerseite 88 steht. Die Bedienkonsole 86 interagiert mit der Steuereinrichtung 18 (vergleiche Fig. 1). Die Bedienkonsole 86 dient zur Steuerung und Überwachung der Werkzeugmaschine 10. In beispielhaften Ausgestaltungen dient die Bedienkonsole 86 auch zur Steuerung und Überwachung der Handhabungszelle 70 und/oder der Rüstzelle 66.

Die Handhabungszelle 70 ist schrankartig gestaltet. Die Handhabungszelle 70 ermöglicht einen automatisierten Werkstückwechsel. In beispielhaften Ausgestaltungen dient die Handhabungszelle 70 auch zur zumindest temporären Speicherung von Werkstücken (Rohlinge und/oder bearbeitete Werkstücke). Die Handhabungszelle 70 ruht auf einem Gestell 74 und umfasst eine Einhausung 78. Im Ausführungsbeispiel ist eine Tür 98 vorgesehen, über die ein Innenraum der Handhabungszelle 70 zugänglich ist.

In Fig. 2 ist ferner eine Handhabungseinheit 100 der Handhabungszelle 70 angedeutet, die einen Handhabungsroboter 102 umfasst. Der Handhabungsroboter 102 ist im Ausführungsbeispiel ein hängender Roboter und beispielsweise deckenseitig (oben) gelagert, vergleiche einen in Fig. 2 mit 104 bezeichnete Deckenseite.

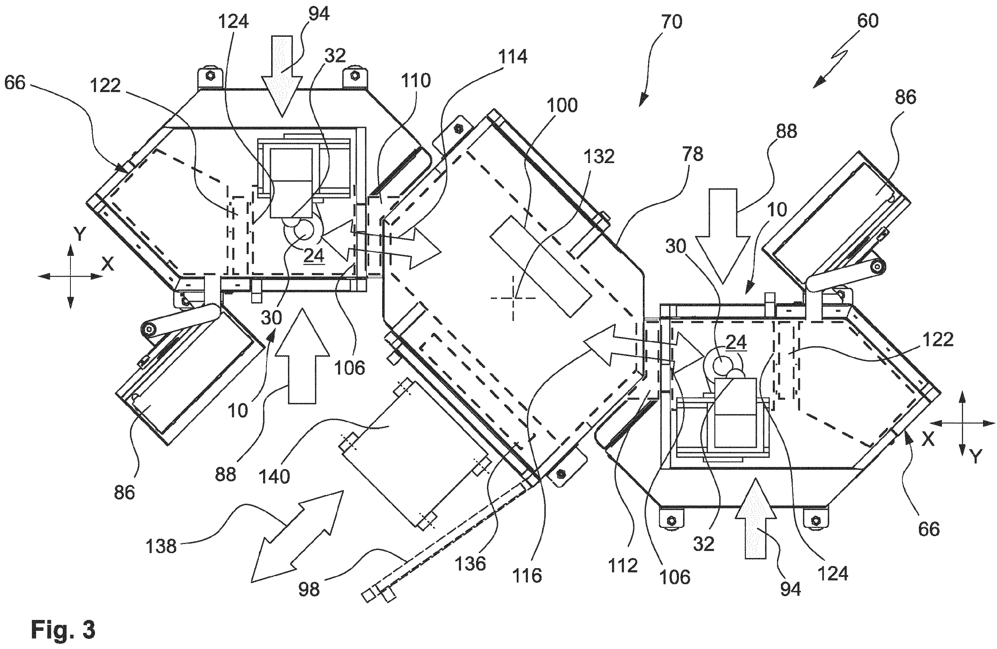

Auf Basis von Fig. 2 veranschaulicht Fig. 3 eine schematische Draufsicht auf ein Fertigungssystem 60. Das Ausführungsbeispiel gemäß Fig. 3 unterscheidet sich insoweit von der Darstellung gemäß Fig. 2, als dass in Fig. 3 eine Handhabungszelle 70 vorgesehen ist, die zwischen einer ersten Werkzeugmaschine 10 und einer zweiten Werkzeugmaschine 10 angeordnet ist. Die Werkzeugmaschinen 10 sind im Ausführungsbeispiel gleichartig gestaltet. Jede der beiden Werkzeugmaschinen 10 umfasst einen Arbeitsraum 24 mit Werkstückhalter 30 und Werkzeugspindel 32. Die Orientierung der Werkzeugmaschinen 10 wird jeweils durch ein (Maschinen-) Koordinatensystem X-Y veranschaulicht. Die Z-Achse ist jeweils senkrecht zur Ansichtsebene.

Die Handhabungszelle 70 ist mit einer in Fig. 3 lediglich durch einen Block dargestellten Handhabungseinheit 100 vorgesehen. Die Handhabungszelle 70 weist eine erste Beladeschnittstelle 110 in Richtung auf die erste Werkzeugmaschine 10 sowie eine zweite Beladeschnittstelle 112 in Richtung auf die zweite Werkzeugmaschine 10 auf. Ein Pfeil 114 veranschaulicht einen Ladevorgang durch die erste Beladeschnittstelle 110 hindurch. Ein Pfeil 116 veranschaulicht einen Ladevorgang durch die zweite Beladeschnittstelle 112 hindurch. Die Handhabungszelle 70 ist derart gestaltet, dass ein Eingriff in den Arbeitsraum 24 der Werkzeugmaschinen 10 nur während des tatsächlichen Werkstückwechsels erfolgt. Wenn kein Werkstückwechsel erfolgt, also etwa während der Bearbeitung eines am Werkstückhalter 30 aufgenommenen Werkstücks, gibt es keinen Eingriff der Handhabungszelle 70 in den jeweiligen Arbeitsraum.

Die Werkzeugmaschinen 10 umfassen jeweils eine Rückseite 94, an der der Werkstückhalter 30 und die Werkzeugspindel 32 mittelbar oder unmittelbar gelagert sind. Der Rückseite 94 gegenüberliegend ist eine Bedienerseite 88 vorgesehen, über die ein Bediener den Arbeitsraum 24 einsehen kann und/oder ein Zugang zum Arbeitsraum 24 ermöglicht ist.

Eine erste seitliche Seite des Arbeitsraums 24 der Werkzeugmaschinen 10 dient als Beladeseite 106. Dort ist die Beladeschnittstelle 110, 112 an den Arbeitsraum 24 angekoppelt. Eine von der Beladeseite 106 abgewandte Seite dient als Rüstseite 124. Dort ist jeweils die Rüstzelle 66 über eine Rüstschnittstelle 122 angekoppelt. Die Rüstschnittstelle 122 kann auch als Werkzeugwechselschnittstelle bezeichnet werden. Bei beiden im Ausführungsbeispiel gemäß Fig. 3 gezeigten Werkzeugmaschinen 10 ist bei Betrachtung des Arbeitsraums 24 über die Vorderseite/Bedienerseite 88 die Beladeseite 106 an derselben Seite des Arbeitsraums 24 vorgesehen. In Fig. 3 sind die beiden Werkzeugmaschinen 10 voneinander beabstandet und relativ zueinander um 180° in Bezug auf eine (gedachte) vertikale Mitttenachse 132 versetzt.

Auf diese Weise kann mit ein und derselben Handhabungszelle 70 eine Beladung zweier gleichartiger Werkzeugmaschinen 10 erfolgen. Es ergeben sich einerseits eine kompakte Bauweise des Fertigungssystems 60 und andererseits eine gleichwohl gute Zugänglichkeit über die jeweilige Bedienerseite 88 der Werkzeugmaschinen 10. Vergleiche hierzu auch die beispielhaft gezeigte Anordnung der jeweiligen Bedienkonsole 86 in Nachbarschaft zur Bedienerseite 88 der Werkzeugmaschinen 10 in der Draufsicht gemäß Fig. 3.

Im Ausführungsbeispiel gemäß Fig. 3 ist die Tür 98 der Einhausung 78 der Handhabungszelle 70 geöffnet. Die Handhabungszelle 70 weist eine Beschickungsschnittstelle 136 auf, über die ein Beschickungswagen 140 entlang einer Einfahrrichtung 138 in einen Innenraum innerhalb der Einhausung 78 einfahren kann. Wenn der Beschickungswagen 140 in die Einhausung 78 eingefahren ist, kann die Tür 98 geschlossen werden. Über die Beschickungsschnittstelle 136 werden also üblicherweise keine einzelnen Werkstücke oder einzelne Ladehilfsmittel individuell transferiert.

Stattdessen dient die Beschickungsschnittstelle 136 zum Einfahren und Ausfahren des Beschickungswagens 140, der eine Mehrzahl von Ladehilfsmitteln und gegebenenfalls eine Vielzahl von Werkstücken enthalten kann. Auf diese Weise kann die Handhabungszelle 70 auch als Speicher oder Zwischenspeicher dienen. Dies ermöglicht einen hochautomatisierten und zumindest zeitweise autonomen Betrieb des Fertigungssystems 60. Im Ausführungsbeispiel dient der Beschickungswagen 140 zur Aufnahme von unbearbeiteten Werkstücken (Rohlingen) sowie zur Aufnahme von bearbeiteten Werkstücken (Fertigteile). Dies ist nicht einschränkend zu verstehen.

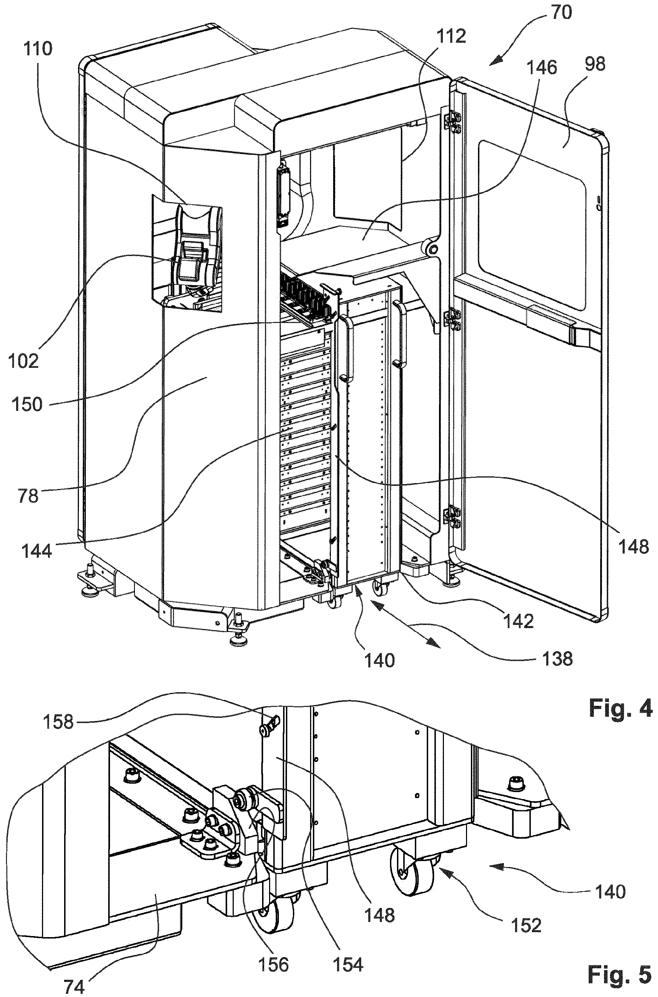

Fig. 4 veranschaulicht anhand einer perspektivische Darstellung einen Zustand der Handhabungszelle 70, bei der der Beschickungswagen 140 in einen Stellplatz 142 innerhalb der Einhausung 78 eingefahren ist. In diesem Zustand kann die Tür 98 geschlossen werden, so dass der Beschickungswagen 140 vollständig von der Einhausung 78 beherbergt ist. Dies erlaubt einen sicheren und fehlerarmen Betrieb der Handhabungszelle 70. Etwaige Handhabungsvorgänge sind durch die Einhausung 78 geschützt. Ferner ist in Fig. 4 (teilweise) der Handhabungsroboter 102 gezeigt, der bedarfsweise durch die erste Beladeschnittstelle 110 und/oder die zweite Beladeschnittstelle 112 in Richtung auf einen Arbeitsraum 24 einer Werkzeugmaschine 10 geführt werden kann, um einen Werkstückwechsel vorzunehmen.

Der Beschickungswagen 140 weist eine Mehrzahl von Aufnahmeplätzen 144 auf, die im Ausführungsbeispiel als Einschübe gestaltet sind. Beispielhaft sind fünf oder mehr übereinander angeordnete Aufnahmeplätze 144 vorgesehen. Die Aufnahmeplätze 144 dienen zur Aufnahme von Ladehilfsmitteln 150. Als Ladehilfsmittel 150 können etwa Tablare oder Trays dienen. Auch die Verwendung sogenannter Euroboxen oder ähnlicher Ladehilfsmittel ist vorstellbar. Wesentlich ist, dass die Ladehilfsmittel 150 in die Aufnahmeplätze 144 eingeführt werden können. Eine Transferrichtung der Ladehilfsmittel 150 ist im Ausführungsbeispiel etwa senkrecht zur Einfahrrichtung 138 des Beschickungswagens 140.

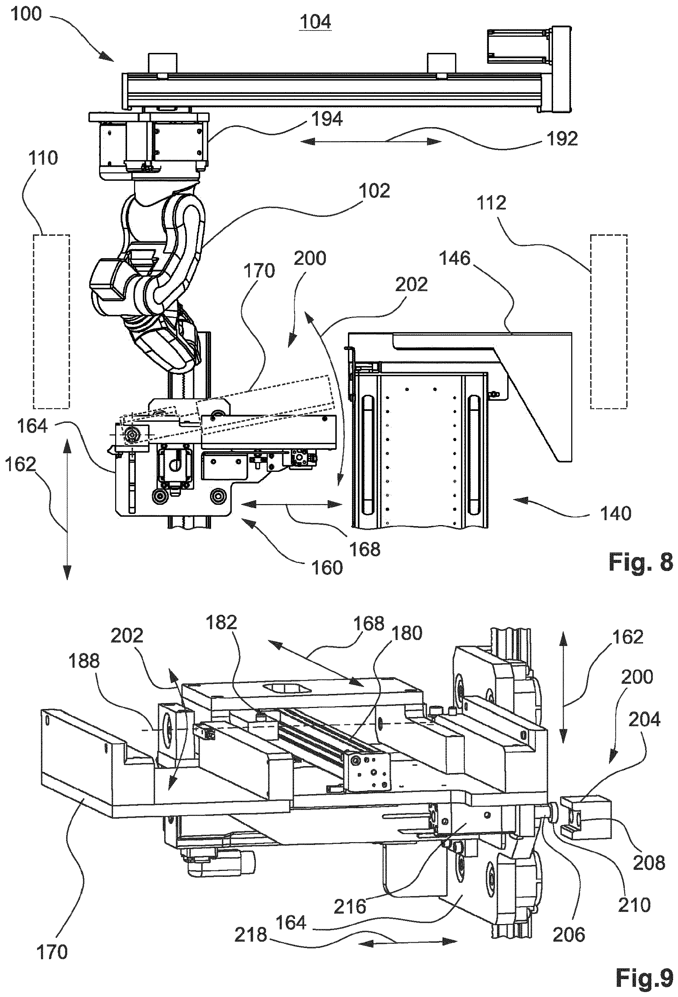

Im Ausführungsbeispiel gemäß Fig. 4 ist ferner eine Abdeckung 146 vorgesehen, die einen genutzten Bewegungsraum des deckenseitig angeordneten Handhabungsroboters 102 nach unten abschirmt. Der Beschickungswagen 140 ist im Stellplatz 142 unterhalb der Abdeckung 146 positioniert (vergleiche ergänzend auch Fig. 8) und wird durch diese geschützt.

Zur Sicherung von Ladehilfsmitteln 150 in den Aufnahmeplätzen 144 des Beschickungswagens 140 dient ein Sicherungselement 148, das im Ausführungsbeispiel als Sicherungsleiste gestaltet ist. Fig. 5 veranschaulicht eine mechanische Deaktivierung (und Aktivierung) des Sicherungselements 148 beim Einfahren (und Ausfahren) des Beschickungswagens 140. Der Beschickungswagen 140 weist ein Fahrwerk 152 auf. Der Beschickungswagen 140 ist rollbar, ein Einfahren in den Stellplatz 142 ist in der Einfahrrichtung 138 ermöglicht. Am Sicherungselement 148 ist zumindest eine Rolle 154 angeordnet, die beim Einfahren des Beschickungswagens 140 eine Rampe 156 kontaktiert, die mit dem Gestell 74 der Handhabungszelle 70 verbunden ist. Beim Einfahren des Beschickungswagens 140 wird die Rolle 154 durch die (feste) Rampe 156 angehoben, wodurch auch das Sicherungselement 148 angehoben wird.

Das Sicherungselement 148 ist über eine geneigte Umlenkung 158 beweglich am Beschickungswagen 140 angeordnet. Auf diese Weise wird die Hubbewegung beim Anheben der Rolle 154 zumindest teilweise in eine Horizontalbewegung (im Ausführungsbeispiel parallel zur Einfahrrichtung 138) umgelenkt. Dies erlaubt ein seitliches Ausrücken des Sicherungselements 148, so dass Ladehilfsmittel 150 aus den Aufnahmeplätzen 144 entnommen werden können. Sobald der Beschickungswagen 140 aus dem Stellplatz 142 herausgefahren ist, ist das Sicherungselement 148 wieder aktiviert. Außerhalb des Stellplatzes 142 in der Handhabungszelle 70 sind die Ladehilfsmittel 150 in ihrer Lage in den Aufnahmeplätzen 144 des Beschickungswagens 140 hinreichend gesichert.

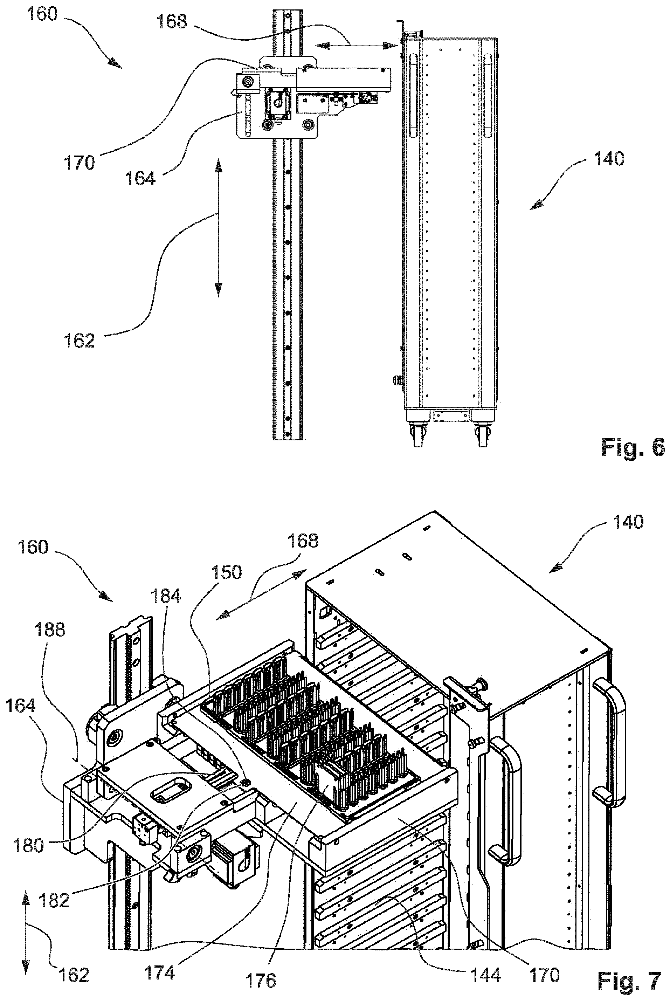

Fig. 6 veranschaulicht anhand einer seitlichen Darstellung (die Ansichtsorientierung entspricht der Einfahrrichtung 138) eine Bereitstellungseinheit 160, die zum Transfer von Ladehilfsmitteln 150 mit Werkstücken zwischen dem Beschickungswagen 140 und der Handhabungseinheit 100 dient. Die Bereitstellungseinheit 160 kann Ladehilfsmittel 150 in einer Bereitstellungsposition positionieren, in der die Ladehilfsmittel für die Handhabungseinheit 100 erreichbar sind. Die Bereitstellungseinheit 160 und deren Zusammenwirken mit dem Beschickungswagen 140 wird ergänzend anhand einer perspektivischen Teilansicht in Fig. 7 veranschaulicht. Vergleiche ergänzend auch die Darstellungen in Fig. 8 und Fig. 9.

Im Ausführungsbeispiel weist die Bereitstellungseinheit 160 eine Hubachse 162 und eine Transferachse 168 auf. Die Hubachse 162 ist vertikal orientiert. Die Transferachse 168 ist horizontal orientiert. Die Transferachse 168 ist etwa senkrecht zur Einfahrrichtung 138 für den Beschickungswagen 140 orientiert.

Die Hubachse 162 umfasst einen vertikal verfahrbaren Hubschlitten 164, der mit einem Hubantrieb gekoppelt ist und Komponenten der Transferachse 168 trägt. Die Transferachse 168 umfasst einen horizontal verfahrbaren Träger 170, der zur Aufnahme von Ladehilfsmitteln 150 dient. Über eine Bewegung entlang der Hubachse 162 kann der Träger 170 einen gewählten Aufnahmeplatz 144 im Beschickungswagen 140 ansteuern. Über die Transferachse 168 kann der Träger 170 in den Beschickungswagen 140 einfahren oder aus diesen herausfahren, um Ladehilfsmittel 150 zu transferieren.

Als Ladehilfsmittel 150 dient im Ausführungsbeispiel gemäß Fig. 7 ein Tablar 174. Andere Arten von Ladehilfsmitteln sind denkbar. Das Ladehilfsmittel 150 dient zur Aufnahme von Werkstücken 176, die dort in geeigneten Aufnahmen positioniert sind. Eine Aufnahme eines Ladehilfsmittels 150 aus einem Aufnahmeplatz 144 oder eine Ablage des Ladehilfsmittels 150 in/auf einem Aufnahmeplatz 144 des Beschickungswagens 140 umfasst üblicherweise eine Positionierung des Trägers 140 entlang der Transferachse 168 und eine (betragsmäßig kleine) Hubbewegung entlang der Hubachse 162 zum Anheben oder Absenken innerhalb des Beschickungswagens 140. Wenn der Träger 170 mit dem Ladehilfsmittel 150 aus dem Beschickungswagen 140 ausgefahren ist, erfolgt eine (üblicherweise betragsmäßig größere) Hubbewegung entlang der Hubachse 162, um das Ladehilfsmittel 150 in der Bereitstellungsposition zu positionieren. Die erforderliche Ansteuerung der Hubachse 162 und der Transferachse 168 erfolgt über die Steuereinrichtung 18 (vergleiche Fig. 1) oder eine andere Steuereinrichtung der Handhabungszelle 70 bzw. des Fertigungssystems 60.

Die Transferachse 168 umfasst einen Linearantrieb 180, der beispielhaft einen Zylinder umfasst. Im Ausführungsbeispiel gemäß Fig. 7 ist ferner eine formschlüssige Mitnahme des Ladehilfsmittels 150 gezeigt. Zu diesem Zweck ist ein Mitnahmezapfen 182 vorgesehen, der in eine Mitnahmeausnehmung 184 eingreifen kann. Vergleiche zum Mitnahmezapfen 182 und zum Linearantrieb 180 auch die Darstellung in Fig. 9. In einer beispielhaften Ausgestaltung ist die Mitnahmeausnehmung 184 in Richtung auf den Hubschlitten 164 verjüngt, beispielsweise V-förmig gestaltet, so dass sich eine Zentrierung ergibt, wenn der Mitnahmezapfen 182 das Ladehilfsmittel 150 über die Mitnahmeausnehmung 184 aus dem Beschickungswagen 140 zieht.

Im Ausführungsbeispiel ist die Mitnahmeausnehmung 184 beim Ladehilfsmittel 150 in einer vorspringenden Lasche angeordnet. Im Ausführungsbeispiel ist der Mitnahmezapfen 182 beim durch den Linearantrieb 180 verfahrbaren Träger 170 der Transferachse 168 angeordnet. Ein Einrücken oder Ausrücken des Mitnahmezapfens 182 in Bezug auf die Mitnahmeausnehmung 184 erfordert üblicherweise eine (betragsmäßig kleine) Hubbewegung entlang der Hubachse 162, wenn das Ladehilfsmittel 150 auf einem Aufnahmeplatz 144 des Beschickungswagens 140 aufliegt.

In beispielhaften Ausgestaltungen umfasst der Träger 170 der Transferachse 168 ferner eine Kippachse 188. Um die Kippachse 188 ist bedarfsweise eine leichte Verkippung des Trägers 170 und eines darauf angeordneten Ladehilfsmittels 150 möglich. Dies erlaubt eine Bereitstellung des Ladehilfsmittels 150 und/oder von Werkstücken 176 in einer Vorzugsorientierung. Dies kann die Übergabe von Werkstücken 176 in der Bereitstellungsposition an die Handhabungseinheit 100 vereinfachen.

Fig. 8 veranschaulicht anhand einer seitlichen Darstellung (Ansichtsorientierung vergleichbar zu der von Fig. 6) ein Zusammenwirken zwischen der Handhabungseinheit 100 und der Bereitstellungseinheit 160. Die Handhabungseinheit 100 weist einen Handhabungsroboter 102 auf, der an der Deckenseite 104 der Handhabungszelle 70 geführt ist (vergleiche auch Fig. 2). Der Handhabungsroboter 102 ist in beispielhaften Ausgestaltungen zumindest in einem eingezogenen Zustand oberhalb des Beschickungswagens 140 und oberhalb der Bereitstellungseinheit 160 angeordnet.

In beispielhaften Ausgestaltungen ist der Handhabungsroboter 102 dazu ausgebildet, Werkstücke 176 bedarfsweise über eine erste Beladeschnittstelle 110 einer ersten Werkzeugmaschine 10 und/oder über eine zweite Beladeschnittstelle 112 einer zweiten Werkzeugmaschine 10 bereitzustellen. Dies umfasst ein zumindest teilweises Einfahren des Handhabungsroboters 102 in einen jeweiligen Arbeitsraum 24 der Werkzeugmaschine 10. Die erste Beladeschnittstelle 110 und die zweite Beladeschnittstelle 112 sind voneinander beabstandet, vergleiche auch die schematische Darstellung in Fig. 3.

Zur Überwindung des Abstands zwischen der ersten Beladeschnittstelle 110 und der zweiten Beladeschnittstelle 112 dient eine Positionierachse 192, entlang der der Handhabungsroboter 102 über einen Schlitten 194 horizontal verfahrbar geführt ist. Im Ausführungsbeispiel gemäß Fig. 8 ist die Positionierachse 192 parallel zur Transferachse 168. Dies ist nicht einschränkend zu verstehen. Entlang der Positionierachse 192 kann der Handhabungsroboter 102 verfahren werden, um eine günstige Position in Bezug auf die erste Beladeschnittstelle 110 und die zweite Beladeschnittstelle 112 einzunehmen. Sofern lediglich eine einzige Beladeschnittstelle 110 vorgesehen ist, kann bedarfsweise auf die Positionierachse 192 verzichtet werden.

Die Handhabungseinheit 100 dient dazu, Werkstücke 176 zwischen der Bereitstellungsposition und der jeweiligen Werkstückauflage 30 im Arbeitsraum 24 der Werkzeugmaschine 10 zu transferieren. Dies erfolgt durch eine Beladeschnittstelle 110, 112 hindurch in den jeweiligen Arbeitsraum 24 hinein. Mit Bezugnahme auf die Figuren 8 und 9 wird ein Kippmechanismus 200 veranschaulicht, der eine Verkippung des Trägers 170 mit daran aufgenommenen Ladehilfsmittel 150 um die Kippachse 188 ermöglicht. In Fig. 8 ist eine gekippte Stellung des Trägers 170 anhand einer gestrichelten Darstellung angedeutet. Die gezielte Verkippung des Trägers 170 erlaubt die Bereitstellung von Werkstücken 176 in einer Vorzugsorientierung. Dies erhöht die Genauigkeit und vereinfacht das Ergreifen der Werkstücke 176 (oder deren Ablage) durch einen Werkstückgreifer des Handhabungsroboters 102.

Der Träger 170 ist um die Kippachse 188 verschwenkbar am Hubschlitten 164 gelagert. Die Verkippung durch den Kippmechanismus 200 kann gezielt in der Bereitstellungsposition herbeigeführt werden. Zu diesem Zweck ist ein Haltestück 204 vorgesehen, das gestellseitig an der Handhabungszelle 70 gelagert ist. Der Träger 170 weist ein Lagerstück 206 auf, das bedarfsweise in das Haltestück 204 einrücken kann. In Fig. 9 sind das Haltestück 204 und das Lagerstück 206 aus Veranschaulichungsgründen voneinander beabstandet dargestellt. Beispielhaft weist das Haltestück 204 eine Nut 208 auf, in die eine Rolle 210 des Lagerstücks 206 einrücken kann. Wenn das Lagerstück 206 in das Haltestück 204 eingerückt ist, hält das Haltestück 204 das Lagerstück 206 und folglich den Träger 170 fest, wenn der Hubschlitten 164 über die Hubachse 162 weiter verfahren wird. Die in Fig. 8 gestrichelt angedeutete Kippstellung des Trägers 170 lässt sich herbeiführen, wenn der Hubschlitten 164 entlang der Hubachse 162 leicht abgesenkt wird.

Dies bewirkt eine Verkippung des Trägers 170 um die Kippachse 188, vergleiche einen gekrümmten Doppelpfeil 202 in den Figuren 8 und 9. Fig. 9 veranschaulicht ferner eine Ausgestaltung, bei der ein Aktuator 216 am Träger 170 gelagert ist. Der Aktuator 216 ist dazu ausgebildet, das Lagerstück 206 bedarfsweise einzurücken oder auszurücken, vergleiche einen Doppelpfeil 218 zur Veranschaulichung der Bewegungsrichtung. Auf diese Weise kann die Rolle 210 in die Nut 208 einfahren. Es ist grundsätzlich auch vorstellbar, auf den Aktuator 216 zu verzichten. Ein Einrücken des Lagerstücks 206 in das Haltestück 204 kann dann beispielsweise über eine definierte Bewegung des Trägers 170 entlang der Transferachse 168 bewerkstelligt werden.

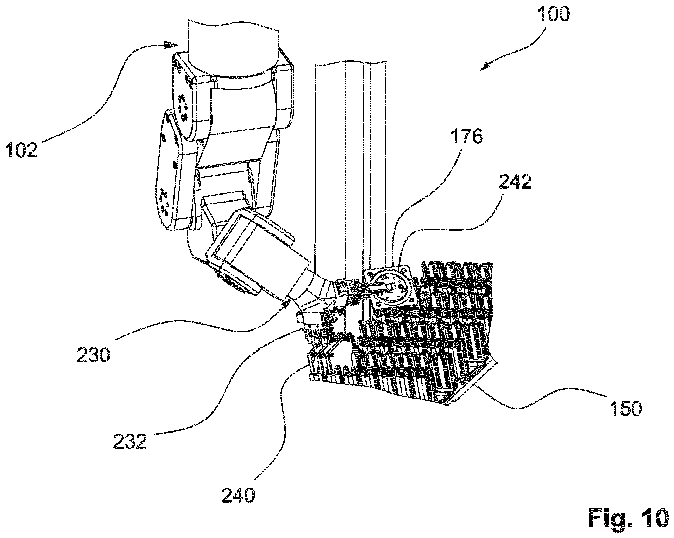

Fig. 10 veranschaulicht anhand einer perspektivischen Teilansicht eine beispielhafte Ausgestaltung des Handhabungsroboters 102 der Handhabungseinheit 100. Der Handhabungsroboter 102 ist im Ausführungsbeispiel als Knickarmroboter gestaltet. Andere Gestaltungen der Handhabungseinheit 100 sind gleichwohl vorstellbar. Der Handhabungsroboter 102 ist ein hängender Roboter. Bedarfsweise ist deckenseitig (oder wandseitig) eine Positionierachse 192 vorgesehen (vergleiche Fig. 8).

Zum Greifen oder Ablegen von Werkstücken weist der Handhabungsroboter 102 einen Endeffektor in Form eines Werkstückgreifers 230 auf. Im Ausführungsbeispiel ist der Werkstückgreifer 230 als Mehrfachgreifer 232 gestaltet. Auf diese Weise kann der Werkstückgreifer 230 Rohlinge 240 vom Ladehilfsmittel 150 aufnehmen und bearbeitete Werkstücke 242 an das Ladehilfsmittel 150 abgeben, ohne zwischenzeitlich den Werkstückhalter 30 der Werkzeugmaschine 10 anfahren zu müssen. Dasselbe gilt für den Werkstückaustausch beim Werkstückhalter 30 im Arbeitsraum 24 der Werkzeugmaschine 10. Dies reduziert die Werkstückwechselzeiten.

## Patentansprüche

1. Handhabungszelle (70) für eine Werkzeugmaschine (10), die Folgendes aufweist:
- eine Einhausung (78),
- eine erste Beladeschnittstelle (110), die an einen Arbeitsraum (24) einer ersten Werkzeugmaschine (10) ankoppelbar ist,
- eine Handhabungseinheit (100) mit einem Handhabungsroboter (102),
- einen Beschickungswagen (140), der zum Transport von auf Ladehilfsmitteln (150), insbesondere auf Tablaren (174), angeordneten Werkstücken (176) dient,
- eine Beschickungschnittstelle (136) für den Beschickungswagen (140),
- eine Bereitstellungseinheit (160), die Ladehilfsmittel (150) zwischen dem Beschickungswagen (140) und einer Bereitstellungsposition zur Übergabe zwischen der Handhabungseinheit (100) und der Bereitstellungseinheit (160) verfährt, und
- einen in die Einhausung (78) der Handhabungszelle (70) integrierten Stellplatz (142) für den Beschickungswagen (140), wobei im eingefahrenen Zustand des Beschickungswagens (140) ein Transfer von Ladehilfsmitteln (150) zwischen dem Beschickungswagen (140) und der Bereitstellungsposition ermöglicht ist, **dadurch gekennzeichnet, dass**
der Beschickungswagen (140) ein bewegliches Sicherungselement (156) zur Sicherung aufgenommener Ladehilfsmittel (150) aufweist, das beim Einfahren des Beschickungswagens (140) in den Stellplatz (142) mechanisch entsichert wird.

2. Handhabungszelle (70) nach Anspruch 1, wobei der Handhabungsroboter (102) dazu ausgebildet ist, zumindest mit einem Werkstückgreifer (230) durch die erste Beladeschnittstelle (110) hindurch in den Arbeitsraum (24) der Werkzeugmaschine (10) einzufahren, um dort ein Werkstück (176) direkt an einen Werkstückhalter (30) zu übergeben oder von diesem zu übernehmen.

3. Handhabungszelle (70) nach Anspruch 1 oder 2, wobei der Handhabungsroboter (102) ein hängender Roboter, insbesondere ein hängender Knickarmroboter ist, und/oder wobei der Handhabungsroboter (102) einen Mehrfachgreifer (232) für Werkstücke (176) aufweist.

4. Handhabungszelle (70) nach einem der Ansprüche 1-3, ferner aufweisend eine von der ersten Beladeschnittstelle (110) abgewandte zweite Beladeschnittstelle (112), die an einen Arbeitsraum (24) einer zweiten Werkzeugmaschine (10) ankoppelbar ist.

5. Handhabungszelle (70) nach Anspruch 4, wobei der Handhabungsroboter (102) entlang einer Positionierachse (192), insbesondere einer horizontal orientierten und/oder deckenseitigen Positionierachse (192), zwischen der ersten Beladeschnittstelle (110) und der zweiten Beladeschnittstelle (112) verfahrbar ist, und wobei die Bereitstellungsposition entlang des Verfahrweges des Handhabungsroboters (102) entlang der Positionierachse (192) zwischen der ersten Beladeschnittstelle (110) und der zweiten Beladeschnittstelle (112) angeordnet ist.

6. Handhabungszelle (70) nach Anspruch 4 oder 5, wobei der Handhabungsroboter (102) bei der Verfahrbewegung entlang der Positionierachse (192) zwischen der ersten Beladeschnittstelle (110) und der zweiten Beladeschnittstelle (112) über den Beschickungswagen (140) entlanggeführt ist.

7. Handhabungszelle (70) nach einem der Ansprüche 1-6 wobei die Bereitstellungseinheit (160) eine vertikal orientierte Hubachse (162) und eine horizontal orientierte Transferachse (168) mit einem Träger (170) für zumindest ein Ladehilfsmittel (150) aufweist.

8. Handhabungszelle (70) nach Anspruch 7, wobei die Transferachse (168) an einem Hubschlitten (164) angeordnet ist, der entlang der Hubachse (162) verfahrbar ist, und wobei die Transferachse (168) einen Linearantrieb (180) aufweist, um in den Beschickungswagen (140) einzufahren und Ladehilfsmittel (150) von einem oder mehreren Aufnahmeplätzen (144) des Beschickungswagens (140) zu entnehmen oder dort abzusetzen.

9. Handhabungszelle (70) nach Anspruch 7 oder 8, wobei die Hubachse (162) dazu ausgebildet ist, Hubbewegungen oder Absetzbewegungen zu erzeugen, wenn der Träger (170) entlang der Transferachse (168) in den Beschickungswagen (140) eingefahren ist, um Ladehilfsmittel (150) gezielt von Aufnahmeplätzen (144) anzuheben oder dort abzusetzen.

10. Handhabungszelle (70) nach einem der Ansprüche 1-9, wobei die Bereitstellungseinheit (160) ferner einen Kippmechanismus (200) aufweist, der bedarfsweise Ladehilfsmittel (150) ankippt, um eine Vorzugsorientierung für Werkstücke (176) im Ladehilfsmittel (150) zu erzeugen.

11. Handhabungszelle (70) nach Anspruch 10, wobei der Kippmechanismus (200) eine Kippachse (188), ein von der Kippachse (188) beabstandetes gestellfestes Haltestück (204) und ein in das Haltestück (204) einrückbares Lagerstück (206) aufweist, und wobei bei eingerücktem Lagerstück (206) eine Hubbewegung entlang der Hubachse (162) eine Verkippung des Ladehilfsmittels (150) ermöglicht ist.

12. Handhabungszelle (70) nach einem der Ansprüche 1-11, wobei ein Wechsel des Beschickungswagens (140) ermöglicht ist, während ein Ladehilfsmittel (150) an der Bereitstellungsposition für die Übergabe von Werkstücken (176) zur Verfügung steht.

13. Fertigungssystem (60) für die spanende Fertigung, insbesondere zur Herstellung feinmechanischer Werkstücke (176), das Folgendes aufweist:
- zumindest eine insbesondere kompakt gestaltete Werkzeugmaschine (10), die zur Mehrachsbearbeitung ausgebildet ist und einen Werkzeughalter (34) und einen Werkstückhalter (30) aufweist, die relativ zueinander in zumindest drei Achsen verfahrbar sind,
wobei der Werkzeughalter (34) und der Werkstückhalter (30) an einer Rückseite (94) eines Arbeitsraums (24) der Werkzeugmaschine (10) gelagert sind, und
- eine Handhabungszelle (70) nach einem der Ansprüche 1 bis 12, wobei die Beladeschnittstelle (110) seitlich an den Arbeitsraum (24) der Werkzeugmaschine (10) ankoppelt.

14. Fertigungssystem (60) nach Anspruch 13, ferner aufweisend:
- zumindest eine weitere, insbesondere kompakt gestaltete Werkzeugmaschine (10), die zur Mehrachsbearbeitung ausgebildet ist und einen Werkzeughalter (34) und einen Werkstückhalter (30) aufweist, die relativ zueinander in zumindest drei Achsen verfahrbar sind, wobei der Werkzeughalter (34) und der Werkstückhalter (30) an einer Rückseite (94) eines Arbeitsraums (24) der Werkzeugmaschine (10) gelagert sind,
wobei die Handhabungszelle (70) eine von der ersten Beladeschnittstelle (110) abgewandte zweite Beladeschnittstelle (112) aufweist,
wobei die erste Beladeschnittstelle (110) seitlich an den Arbeitsraum (24) der ersten Werkzeugmaschine (10) ankoppelt, und
wobei die zweite Beladeschnittstelle (112) seitlich an den Arbeitsraum (24) der zweiten Werkzeugmaschine (10) ankoppelt.

15. Fertigungssystem (60) nach Anspruch 14, wobei die erste Werkzeugmaschine (10) und die zweite Werkzeugmaschine (10) jeweils eine in Bezug auf den Arbeitsraum (24) definierte Beladeseite (106) aufweisen, die für die erste Werkzeugmaschine (10) und die zweite Werkzeugmaschine (10) in Bezug auf den jeweiligen Arbeitsraum (24) gleich angeordnet ist, und wobei die erste Werkzeugmaschine (10) und die zweite Werkzeugmaschine (10) einander gegenüberliegend und um eine gedachte vertikale Mittenachse um 180° versetzt zueinander angeordnet und an die Handhabungszelle (70) angekoppelt sind.

## Claims

1. A handling cell (70) for a machine tool (10), comprising:
- an enclosure (78),
- a first loading interface (110) that is arranged to be coupled to a workspace (24) of a first machine tool (10),
- a handling unit (100) with a handling robot (102),
- a feeding cart (140), which is used for transporting workpieces (176) that are arranged on loading aids (150), in particular on trays (174),
- a feeding interface (136) for the feeding cart (140),
- a provisioning unit (160) that moves loading aids (150) between the feeding cart (140) and a provisioning position for transfer between the handling unit (100) and the provisioning unit (160), and
- a bay (142) for the feeding cart (140), which is integrated in the enclosure (78) of the handling cell (70), wherein, when the feeding cart (140) is in its inserted state, a transfer of loading aids (150) between the feeding cart (140) and the provisioning position is enabled,
**characterized in that**
the feeding cart (140) comprises a movable securing element (156) for securing received loading aids (150), which is mechanically unlocked when the feeding cart (140) enters the bay (142).

2. The handling cell (70) according to claim 1, wherein the handling robot (102) is configured to enter the workspace (24) of the machine tool (10) at least with a workpiece gripper (230) through the first loading interface (110) in order to transfer a workpiece (176) there directly to a workpiece holder (30) or to receive it from the workpiece holder (30).

3. The handling cell (70) according to claim 1 or 2, wherein the handling robot (102) is a suspended robot, in particular a suspended articulated robot, and/or wherein the handling robot (102) comprises a multi-gripper (232) for workpieces (176).

4. The handling cell (70) according to any one of claims 1-3, further comprising a second loading interface (112) that faces away from the first loading interface (110) and that is arranged to be coupled to a workspace (24) of a second machine tool (10).

5. The handling cell (70) according to claim 4, wherein the handling robot (102) is movable along a positioning axis (192), in particular a horizontally oriented and/or ceiling-side positioning axis (192), between the first loading interface (110) and the second loading interface (112), and wherein the provisioning position is arranged along the travel path of the handling robot (102) along the positioning axis (192) between the first loading interface (110) and the second loading interface (112).

6. The handling cell (70) according to claim 4 or 5, wherein the handling robot (102) is guided along the positioning axis (192) between the first loading interface (110) and the second loading interface (112) over the feeding cart (140) during the travel movement.

7. The handling cell (70) according to any one of claims 1-6, wherein the provisioning unit (160) comprises a vertically oriented lifting axis (162) and a horizontally oriented transfer axis (168) with a support (170) for at least one loading aid (150).

8. The handling cell (70) according to claim 7, wherein the transfer axis (168) is arranged on a lifting carriage (164) that is movable along the lifting axis (162), and wherein the transfer axis (168) comprises a linear drive (180) for movement into the feeding cart (140) and for removing loading aids (150) from one or more receiving spaces (144) of the feeding cart (140) or depositing them there.

9. The handling cell (70) according to claim 7 or 8, wherein the lifting axis (162) is adapted to generate lifting movements or depositing movements when the support (170) is inserted along the transfer axis (168) into the feeding cart (140) in order to selectively lift loading aids (150) from receiving spaces (144) or deposit them there.

10. The handling cell (70) according to any one of claims 1-9, wherein the provisioning unit (160) further comprises a tilting mechanism (200) that tilts loading aids (150), if required, to provide a preferred orientation for workpieces (176) in the loading aid (150).

11. The handling cell (70) according to claim 10, wherein the tilting mechanism (200) comprises a tilting axis (188), a frame-fixed holding piece (204) that is spaced from the tilting axis (188), and a bearing piece (206) that is engageable with the holding piece (204), and wherein, with the bearing piece (206) engaged, a lifting movement along the lifting axis (162) enables tilting of the loading aid (150).

12. The handling cell (70) according to any one of claims 1-11, wherein changing the feeding cart (140) is enabled while a loading aid (150) is available at the provisioning position for the transfer of workpieces (176).

13. A manufacturing system (60) for machining, in particular for manufacturing precision mechanical workpieces (176), comprising:
- at least one machine tool (10), in particular of compact design, which is configured for multi-axis machining and has a tool holder (34) and a workpiece holder (30), which can be moved relative to one another in at least three axes,
wherein the tool holder (34) and the workpiece holder (30) are mounted on a rear side (94) of a workspace (24) of the machine tool (10), and
- a handling cell (70) according to any one of claims 1 to 12, wherein the loading interface (110) is laterally coupled to the workspace (24) of the machine tool (10).

14. The manufacturing system (60) according to claim 13, further comprising:
- at least one further machine tool (10), in particular of compact design, which is configured for multi-axis machining and has a tool holder (34) and a workpiece holder (30), which can be moved relative to one another in at least three axes, wherein the tool holder (34) and the workpiece holder (30) are mounted on a rear side (94) of a workspace (24) of the machine tool (10),
wherein the handling cell (70) comprises a second loading interface (112) facing away from the first loading interface (110),
wherein the first loading interface (110) is laterally coupled to the workspace (24) of the first machine tool (10), and
wherein the second loading interface (112) is laterally coupled to the workspace (24) of the second machine tool (10).

15. The manufacturing system (60) according to claim 14, wherein the first machine tool (10) and the second machine tool (10) each have a loading side (106) that is defined with respect to the workspace (24), the loading sides (106) being arranged in the same manner relative to the respective workspaces (24) for the first machine tool (10) and the second machine tool (10), and wherein the first machine tool (10) and the second machine tool (10) are arranged opposite each other and offset by 180° with respect to each other about an imaginary vertical center axis and are coupled to the handling cell (70).

## Revendications

1. Cellule de manipulation (70) pour une machine-outil (10), présentant les éléments suivants :
- une enceinte (78),
- une première interface de chargement (110) qui peut être accouplée à un espace de travail (24) d'une première machine-outil (10),
- une unité de manipulation (100) comportant un robot de manipulation (102),
- un chariot d'alimentation (140) qui sert au transport de pièces (176) disposées sur des moyens auxiliaires de chargement (150), en particulier sur des étagères (174),
- une interface d'alimentation (136) pour le chariot d'alimentation (140),
- une unité de mise à disposition (160) qui déplace les moyens auxiliaires de chargement (150) entre le chariot d'alimentation (140) et une position de mise à disposition pour la livraison entre l'unité de manipulation (100) et l'unité de mise à disposition (160), et
- un emplacement de stationnement (142) pour le chariot d'alimentation (140), lequel emplacement de stationnement est intégré dans l'enceinte (78) de la cellule de manipulation (70), dans laquelle un transfert de moyens auxiliaires de chargement (150) entre le chariot d'alimentation (140) et la position de mise à disposition est possible dans l'état rétracté du chariot d'alimentation (140),
**caractérisée en ce que**
le chariot d'alimentation (140) présente un élément de blocage (156) mobile permettant le blocage des moyens auxiliaires de chargement (150) reçus, lequel élément de blocage est débloqué mécaniquement lors de la rétractation du chariot d'alimentation (140) dans l'emplacement de stationnement (142).

2. Cellule de manipulation (70) selon la revendication 1, dans laquelle le robot de manipulation (102) est conçu pour se rétracter, au moins avec un préhenseur de pièce (230), à travers la première interface de chargement (110) jusque dans l'espace de travail (24) de la machine-outil (10) afin d'y livrer une pièce (176) directement au niveau d'un porte-pièce (30) ou de la retirer de celui-ci.

3. Cellule de manipulation (70) selon la revendication 1 ou 2, dans laquelle le robot de manipulation (102) est un robot suspendu, en particulier un robot à bras articulé suspendu, et/ou dans laquelle le robot de manipulation (102) présente un préhenseur multiple (232) pour pièces (176).

4. Cellule de manipulation (70) selon l'une des revendications 1 à 3, présentant en outre une seconde interface de chargement (112) opposée à la première interface de chargement (110) et pouvant être accouplée à un espace de travail (24) d'une seconde machine-outil (10).

5. Cellule de manipulation (70) selon la revendication 4, dans laquelle le robot de manipulation (102) peut se déplacer le long d'un axe de positionnement (192), en particulier d'un axe de positionnement (192) orienté horizontalement et/ou côté plafond, entre la première interface de chargement (110) et la seconde interface de chargement (112), et dans laquelle la position de mise à disposition est disposée le long de la course de déplacement du robot de manipulation (102) le long de l'axe de positionnement (192) entre la première interface de chargement (110) et la seconde interface de chargement (112).

6. Cellule de manipulation (70) selon la revendication 4 ou 5, dans laquelle le robot de manipulation (102), lors du mouvement de déplacement le long de l'axe de positionnement (192) entre la première interface de chargement (110) et la seconde interface de chargement (112), est guidé au-dessus du chariot d'alimentation (140).

7. Cellule de manipulation (70) selon l'une des revendications 1 à 6, dans laquelle l'unité de mise à disposition (160) présente un axe de levage (162) orienté verticalement et un axe de transfert (168) orienté horizontalement avec un support (170) pour au moins un moyen auxiliaire de chargement (150).

8. Cellule de manipulation (70) selon la revendication 7, dans laquelle l'axe de transfert (168) est disposé au niveau d'un chariot de levage (164) pouvant se déplacer le long de l'axe de levage (162), et dans laquelle l'axe de transfert (168) présente un entraînement linéaire (180) afin de se rétracter dans le chariot d'alimentation (140) et d'extraire des moyens auxiliaires de chargement (150) d'un ou plusieurs emplacements de réception (144) du chariot d'alimentation (140), ou de les y déposer.

9. Cellule de manipulation (70) selon la revendication 7 ou 8, dans laquelle l'axe de levage (162) est conçu pour créer des mouvements de levage ou des mouvements de dépose lorsque le support (170) est rétracté le long de l'axe de transfert (168) dans le chariot d'alimentation (140) afin de soulever de manière ciblée des moyens auxiliaires de chargement (150) à partir d'emplacements de réception (144), ou de les y déposer.

10. Cellule de manipulation (70) selon l'une des revendications 1 à 9, dans laquelle l'unité de mise à disposition (160) présente en outre un mécanisme de basculement (200) qui, si nécessaire, bascule un moyen auxiliaire de chargement (150) afin de créer une orientation préférentielle pour les pièces (176) dans le moyen auxiliaire de chargement (150).

11. Cellule de manipulation (70) selon la revendication 10, dans laquelle le mécanisme de basculement (200) présente un axe de basculement (188), une pièce de maintien (204) solidaire au châssis et espacée de l'axe de basculement (188), et une pièce d'appui (206) pouvant s'insérer dans la pièce de maintien (204), et dans laquelle, lorsque la pièce d'appui (206) est insérée, un mouvement de levage le long de l'axe de levage (162) permet un basculement du moyen auxiliaire de chargement (150).

12. Cellule de manipulation (70) selon l'une des revendications 1 à 11, dans laquelle un changement du chariot d'alimentation (140) est possible pendant qu'un moyen auxiliaire de chargement (150) est disponible en position de mise à disposition pour la livraison de pièces (176).

13. Système d'usinage (60) pour l'usinage par enlèvement de matière, en particulier pour la fabrication de pièces (176) de mécanique de précision, présentant ce qui suit :
- au moins une machine-outil (10) de conception particulièrement compacte, conçue pour le traitement à axes multiples et présentant un porte-outil (34) et un porte-pièce (30) pouvant se déplacer l'un par rapport à l'autre selon au moins trois axes,
dans lequel le porte-outil (34) et le porte-pièce (30) sont montés sur un côté arrière (94) d'un espace de travail (24) de la machine-outil (10), et
- une cellule de manipulation (70) selon l'une des revendications 1 à 12, dans lequel l'interface de chargement (110) est accouplée latéralement à l'espace de travail (24) de la machine-outil (10).

14. Système d'usinage (60) selon la revendication 13, présentant en outre :
- au moins une autre machine-outil (10) de conception particulièrement compacte, conçue pour le traitement à axes multiples et présentant un porte-outil (34) et un porte-pièce (30) pouvant se déplacer l'un par rapport à l'autre selon au moins trois axes, dans lequel le porte-outil (34) et le porte-pièce (30) sont montés sur un côté arrière (94) d'un espace de travail (24) de la machine-outil (10),
dans lequel la cellule de manipulation (70) présente une seconde interface de chargement (112) opposée à la première interface de chargement (110),
dans lequel la première interface de chargement (110) est accouplée latéralement à l'espace de travail (24) de la première machine-outil (10), et
dans lequel la seconde interface de chargement (112) est accouplée latéralement à l'espace de travail (24) de la seconde machine-outil (10).

15. Système d'usinage (60) selon la revendication 14, dans lequel la première machine-outil (10) et la seconde machine-outil (10) présentent respectivement un côté chargement (106) défini par rapport à l'espace de travail (24), lequel côté chargement est disposé de manière identique pour la première machine-outil (10) comme pour la seconde machine-outil (10) par rapport à l'espace de travail (24) respectif, et dans lequel la première machine-outil (10) et la seconde machine-outil (10) sont disposées en vis-à-vis et de manière à être décalées l'une par rapport à l'autre de 180° autour d'un axe central vertical imaginaire, et sont accouplées à la cellule de manipulation (70).
